# EUROPÄISCHE PATENTSCHRIFT

(11) **EP 1 180 839 B1**
(45) Veröffentlichungstag und Bekanntmachung des Hinweises auf die Patenterteilung: **26.10.2005**
(21) Anmeldenummer: 01890226.2
(22) Anmeldetag: 06.08.2001
(51) Int. Cl.: H02G 11/02, H01R 35/02, F16L 3/01

(54) **Leitungsdurchführung von elektrischen und hydraulischen Kabeln**
Conduit feed-through for electric and hydraulic cables
Traversée de conduites pour câbles électriques et hydrauliques

(30) Priorität: 11.08.2000 AT 13922000
(43) Veröffentlichungstag der Anmeldung: 20.02.2002
(73) Patentinhaber: VOEST-ALPINE Bergtechnik Gesellschaft m.b.H, 8740 Zeltweg (AT)
(72) Erfinder: Krassnitzer, Otto, Ing., 8740 Zeltweg (AT); Felber, Robert, Ing., 8740 Zeltweg (AT)
(74) Vertreter: Haffner, Thomas M.

(56) Entgegenhaltungen:
- WO-A-99/23356
- DE-A- 1 499 002
- DE-A- 3 715 921
- FR-A- 2 180 460
- US-A- 3 493 009

## Beschreibung

Die Erfindung bezieht sich auf eine Vorrichtung zur Überführung von Hydraulik- und elektrischen Leitungen zwischen zwei gelenkig miteinander verbundenen Bauteilen, welche um einen begrenzten Winkel gegeneinander schwenkbar oder drehbar sind, wobei mit einem Bauteil ein Zylinder für die Axialdurchführung der Hydraulik- und elektrischen Leitungen verbunden ist und mit dem anderen Bauteil eine einen axialen Teilbereich des Zylinders umgebende Kammer verbunden ist.

Bei Schrämmaschinen, bei welchen die Schrämwerkzeuge an einem aus wenigstens zwei relativ zueinander verschwenkbaren Auslegerarmteilen bestehenden Auslegerarm rotierbar gelagert sind, ist es wichtig, daß die erforderlichen Energieversorgungsleitungen geschützt und innerhalb des Auslegerarmes geführt sind. Dabei wird der Antrieb für die rotierenden Schrämwerkzeuge meistens von einem Elektromotor gebildet, wohingegen der Motor für die relativ zueinander verschwenkbaren Auslegerarmteile hydraulisch angetrieben wird. Es ist daher bei derartigen Auslegerarmen von Schrämmaschinen die Verlegung sowohl von Hydraulikleitungen als auch von elektrischen Leitungen im Inneren des Auslegers notwendig, um die Leitungen vor den im Bergbau vorherrschenden Umgebungseinflüssen wie z.B. Staub, Nässe, herabfallende Gesteinsbrocken usw. zu schützen. Die Energieversorgungsleitungen müssen daher auch über geeignete Leitungsdurchführungen zwischen den zueinander verschwenkbaren Auslegerarmteilen geführt werden.

Aus der WO 99/23356 ist beispielsweise bereits eine Einrichtung zum Schneiden bzw. Schrämen von Material bekannt geworden, bei welcher ein aus wenigstens zwei relativ zueinander verschwenkbaren Auslegerarmteilen bestehender schwenkbarer Auslegerarm vorgesehen ist. Koaxial zu den Schwenkachsen für die Relativverschwenkung der Auslegerarmteile sind Planetengetriebe angeordnet, welche die Drehzahl von Drehantrieben für den Schwenkantrieb auf eine verringerte Schwenkgeschwindigkeit der Auslegerarmteile reduzieren. Die Auslegerarmteile sind hierbei um ungefähr 300° relativ zueinander verschwenkbar, wobei der Antrieb von einem Hydraulikmotor gebildet wird. Der WO 99/23356 ist zu entnehmen, daß der Hydraulikmotor ein zentrales Sonnenrad antreibt, welches hohl ausgebildet ist und eine axiale Bohrung für die Durchführung von Hydraulikleitungen aufweist.

Aus der DE 37 15 921 A1 ist weiters eine schleifringlose Kabelüberführung zwischen zwei gelenkig miteinander verbundenen Bauteilen bekannt geworden, bei welcher koaxial zur Schwenkachse ein rohrförmiges Element angeordnet ist, wobei das Signalübertragunskabel sich teilweise in axialer Richtung durch das rohrförmige Element erstreckt und teilweise in einer Anzahl von Windungen spiralförmig locker um die Außenseite des rohrförmigen Teiles gewickelt ist.

Die vorliegende Erfindung zielt darauf ab, eine Durchführung für Hydraulikleitungen und für elektrische Leitungen zu schaffen, welche für den Einsatz im Bergbau geeignet ist und bei welcher die Leitungen geschützt innerhalb der gelenkig miteinander verbundenen Bauteile, beispielsweise der Auslegerarmteile von Schrämmaschinen, und innerhalb der Antriebe für die Verschwenkung der schwenkbaren Bauteile geführt werden können. Insbesondere muß die Durchführung der Hydraulik- und elektrischen Leitungen innerhalb eines sehr geringen Durchlaßquerschnitts, beispielsweise innerhalb eines Planetenradgetriebes, erfolgen. Außerdem soll die Drehdurchführung auch für hohe Hydraulikdrucke, wie sie für den Antrieb von Auslegerarmteilen von Schrämmaschinen notwendig sind, und die dabei zum Einsatz gelangenden wenig flexiblen Panzerschläuche verwendbar sein, wobei gleichzeitig auch sichergestellt werden soll, daß trotz der hohen Hydraulikdrucke keine Dichtheitsprobleme auftreten.

Zur Lösung dieser Aufgabe besteht die erfindungsgemäße Vorrichtung im wesentlichen darin, daß der Zylinder eine Mehrzahl von axialen Bohrungen aufweist und daß die Kammer einen ersten axialen Teilbereich für wenigstens eine spiralförmig geführte elektrische Leitung und wenigstens einen weiteren, längs der Achse der Kammer versetzten axialen Teilbereich für spiralförmig geführte Hydraulikleitungen aufweist, wobei eine Mehrzahl von Hydraulikleitungen über je einen Anschlußnippel mit je einer axialen Bohrung verbunden ist. Dadurch daß der Zylinder, welcher mit einem der gegeneinander schwenkbaren Bauteile verbunden ist, eine Mehrzahl von axialen Bohrungen aufweist, wird die Möglichkeit geschaffen die Hydraulik- und die elektrischen Leitungen getrennt voneinander in voneinander verschiedenen axialen Bohrungen des Zylinders zu führen, sodaß die entsprechenden Sicherheitsbestimmungen eingehalten werden und die Hydraulik- und elektrische Leitungen nicht in einer gemeinsamen Bohrung geführt werdem müssen. Vor allem hat aber die Anordnung einer Mehrzahl von axialen Bohrungen innerhalb des Zylinders den Vorteil, daß die einzelnen Hydraulikleitungen mit einem geringeren Durchmesser ausgeführt werden können, sodaß die entsprechenden Hydraulikschläuche dünnwandiger und somit flexibler ausgeführt werden können, sodaß eine einfachere Handhabung der Schläuche gegeben ist. Dadurch daß eine Mehrzahl von Hydraulikleitungen über je einen Anschlußnippel mit je einer axialen Bohrung des Zylinders verbunden ist, wird außerdem die Ankoppelung der einzelnen Hydraulikschläuche an die einzelnen Bohrungen des Durchführungszylinders vereinfacht, wobei aufgrund des geringeren Durchmessers der Hydraulikschläuche auch die Dichtheit in einfacher Weise gewährleistet werden kann. Bei Wahl von entsprechend geformten Anschlußnippeln ist auch die Umlenkung der Hydraulikleitungen in die axialen Bohrungen des Zylinders ohne zusätzliche mechanische Beanspruchung der Hydraulikleitungen erreicht.

Die Anordnung einer Mehrzahl von axialen Bohrungen innerhalb des Durchführungszylinders ermöglicht es auch die Hydraulik-und elektrischen Leitungen besonders platzsparend und auf geringem Querschnitt anzuordnen, wofür mit Vorteil die mit den Hydraulikleitungen verbundenen axialen Bohrungen einen kleineren Durchmesser aufweisen als die axiale Bohrung für die elektrische(n) Leitung(en). Es ist somit eine einzige mit großem Durchmesser ausgeführte axiale Bohrung für die elektrische(n) Leitung(en) sowie eine Mehrzahl von kleineren axialen Bohrungen, an welche die Hydraulikleitungen angeschlossen werden, vorgesehen, sodaß die axialen Bohrungen über den Querschnitt des Zylinders in besonders platzsparender Weise angeordnet werden können. Mit Vorteil ist hiebei die Ausbildung so getroffen, daß die mit den Hydraulikleitungen verbundenen axialen Bohrungen teilkreisförmig um die axiale Bohrung für die elektrische(n) Leitung(en) angeordnet sind. Auf diese Art und Weise kann eine Mehrzahl von axialen Bohrungen im Zylinder angeordnet werden, ohne daß die Stabilität und die Druckfestigkeit des Durchführungszylinders beeinträchtigt wird, wobei auch gleichzeitig das Verhältnis der Summe der Querschnitte der axialen Bohrungen zum gesamten Querschnitt des Zylinders maximiert wird.

Gemäß der Erfindung weist die Kammer, welche mit dem einen der gegeneinander schwenkbaren Bauteile verbunden ist und um einen begrenzten Winkel gegen den mit den Bohrungen versehenen Zylinder für die Axialdurchführung der Hydraulik- und elektrischen Leitungen schwenkbar ist, einen ersten axialen Teilbereich für wenigstens eine spiralförmig geführte elektrische Leitung und wenigstens einen weiteren längs der Achse der Kammer versetzten axialen Teilbereich für spiralförmig geführte Hydraulikleitungen auf. Dadurch wird sichergestellt, daß die Hydraulik- und die elektrischen Leitungen, welche im Inneren der Kammer bzw. der axialen Teilbereiche der Kammern angeordnet sind, geschützt und frei vor äußeren Einflüssen geführt werden können, wobei die spiralförmige Anordnung einen begrenzten Schwenkbereich der gegeneinander schwenkbaren Bauteile zuläßt. Dadurch daß die Hydraulikleitung und die elektrischen Leitungen in unterschiedlichen in axialer Richtung versetzt angeordneten Teilbereichen der Kammer geführt sind, wird eine Ausbildung geschaffen, mit welcher auf die unterschiedlichen Randbedingungen für die Hydraulikleitungen und die elektrischen Leitung Rücksicht genommen werden kann.

Beispielsweise werden die Hydraulikleitungen über Anschlußnippel mit den axialen Bohrungen verbunden, wohingegen die elektrischen Leitungen gemäß einer bevorzugten Weiterbildung der erfindungsgemäßen Vorrichtung über ein Umlenkstück und einen radialen Kanal des Zylinders in die axiale Bohrung,geführt sind. Mit Hilfe des Umlenkstückes gelingt es die relativ steifen elektrischen Leitungen in geeigneter Weise umzulenken, sodaß sie von der spiralförmigen Windung ausgehend in einen radialen Kanal des Zylinders umgelenkt werden und in die vorgesehene axiale Bohrung geführt werden können.

Mit Vorteil kann die Vorrichtung weiters so ausgebildet sein, daß jeweils eine Gruppe von Hydraulikleitungen in voneinander verschiedenen axialen Teilbereichen der Kammer geführt ist. Auf diese Art und Weise kann eine kleinere Anzahl von Hydraulikleitungen in jeweils einem axialen Teilbereich der Kammer geführt werden, sodaß sich die einzelnen Hydraulikschläuche aufgrund ihrer Steifigkeit und aufgrund der bei der Schwenkbewegung der gegeneinander schwenkbaren Bauteile hervorgerufenen Aufweitung und Verengung der Spirale der spiralförmig geführten Hydraulikleitungen nicht gegenseitig behindern. Die innerhalb eines gemeinsamen axialen Teilbereiches der Kammer angeordneten Hydraulikleitungen können entweder parallel zueinander und in einer gemeinsamen Radialebene angeordnet werden oder auch von einem flexiblen Schutzschlauch umgeben sein. Der freie Querschnitt des Schutzschlauches muß hierbei so gewählt sein, daß die durch den Längenausgleich der einzelnen Hydraulikleitungen hervorgerufene Relativverschiebung nicht behindert wird.

In bevorzugter Weise sind die axialen Teilbereiche der Kammer durch sich wenigstens über ein Teilbereich des Querschnitts erstreckende Zwischenwände voneinander getrennt. Durch Anordnung von Zwischenwänden wird die Kammer in mehrere in axialer Richtung aneinander angrenzende Kammern unterteilt, sodaß jeweils abgegrenzte Bereiche entstehen, in denen die spiralförmig angeordneten Leitungen geführt sind ohne die Gefahr, daß die Leitungen zweier benachbarter axialer Teilbereiche miteinander in Berührung gelangen.

Um auch eine Berührung einzelner Windungen der spiralförmig geführten Hydraulikleitungen und damit eine übermäßige Reibung zwischen diesen Leitungen in denjenigen Bereichen zu verhindern, in denen die Leitungen nicht von Schutzschläuchen umgeben sind, ist mit Vorteil die Vorrichtung so getroffen, daß in der Kammer Leitbleche angeordnet sind, welche die einzelnen Windungen der spiralförmig geführten Hydraulikleitungen voneinander trennen.

An der der Zuführung abgewandten Seite des Zylinders ist in vorteilhafter Weise eine Mehrzahl der mit den Hydraulikleitungen verbundenen axialen Bohrungen über eine gemeinsame Ableitung mit einem Verbraucher verbunden. Auf diese Art und Weise werden die zur Axialdurchführung durch die Bohrungen des Zylinders auf mehrere kleine Durchmesser verteilten Hydraulikleitungen wieder zur ursprünglichen geringeren Anzahl von Hydraulikleitungen mit entsprechend vergrößertem Querschnitt zusammengeführt und einem Verbraucher zugeführt.

Wie bereits eingangs erwähnt soll die Axialdurchführung für die Hydraulik- und elektrischen Leitungen auf besonders kleinem Querschnitt Platz finden und außerdem in die zueinander schwenkbaren Bauteile bzw. den Antrieb für deren Verschwenkung integriert werden, wozu mit Vorteil die Ausbildung so getroffen ist, daß auf dem Zylinder ein Sonnenrad eines Planetenradgetriebes für die Verschwenkung der gelenkig miteinander verbundenen Bauteile gleitend gelagert ist. Dadurch wird eine besonders kompakte Bauform erreicht.

Die axialen Bohrungen des Zylinders können naturgemäß für die Axialdurchführung aller Arten von Hydraulikleitungen verwendet werden.So ist es beispielsweise denkbar, daß bei einem Einsatz in Bergbaumaschinen die Hydraulikleitungen auch der Zuführung von Kühlwasser zu dem Schrämmotor bzw. der Zuführung von Wasser für die Bedüsung des Schrämkopfes dienen.

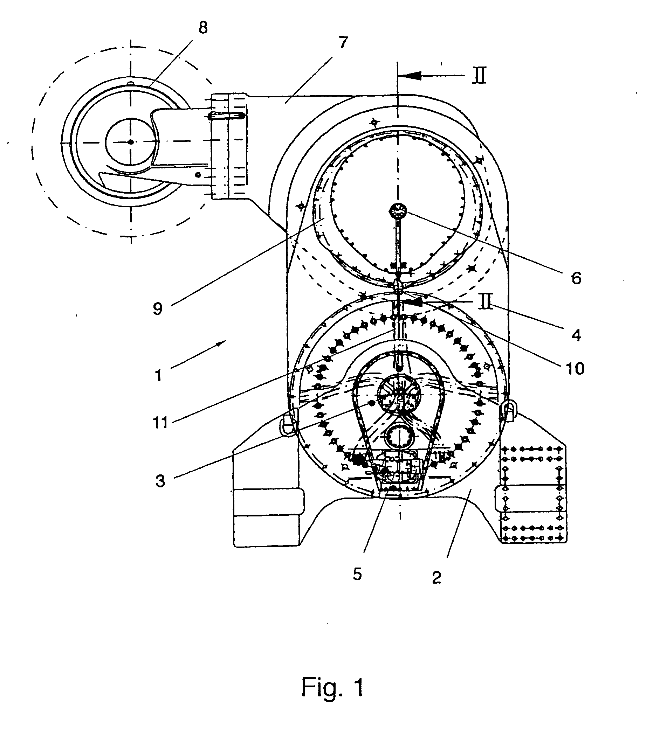

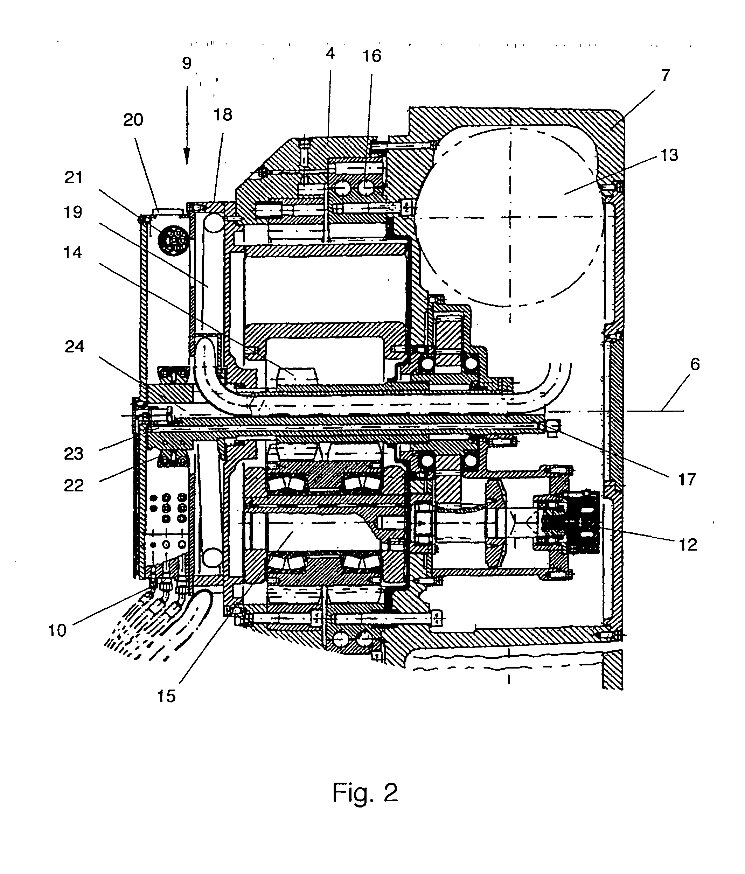

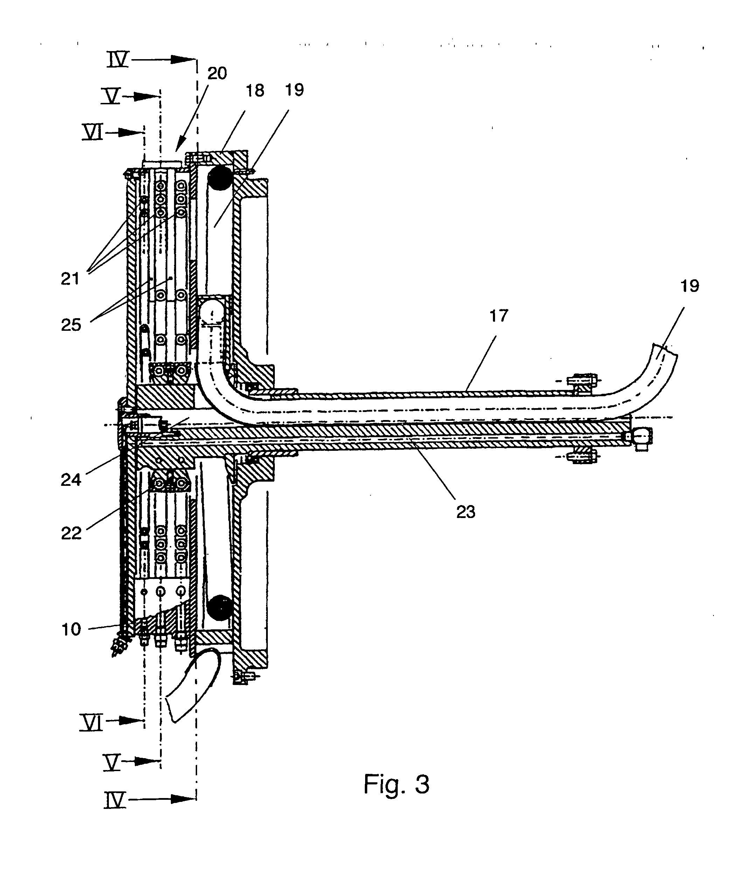

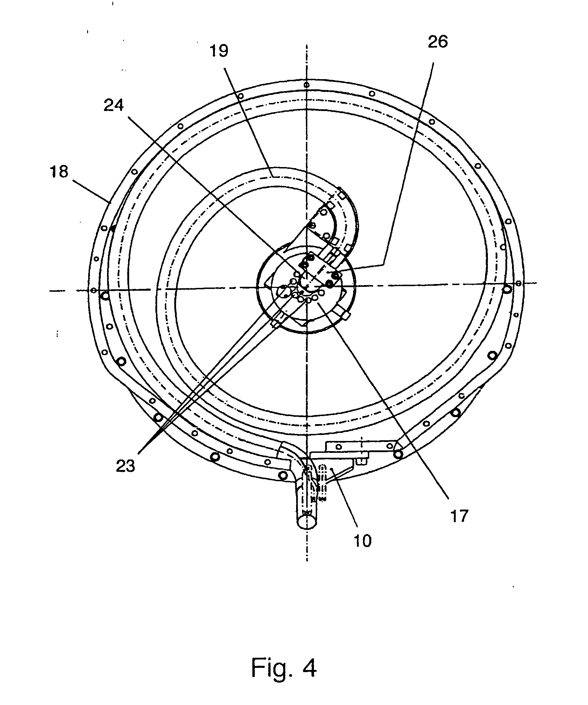

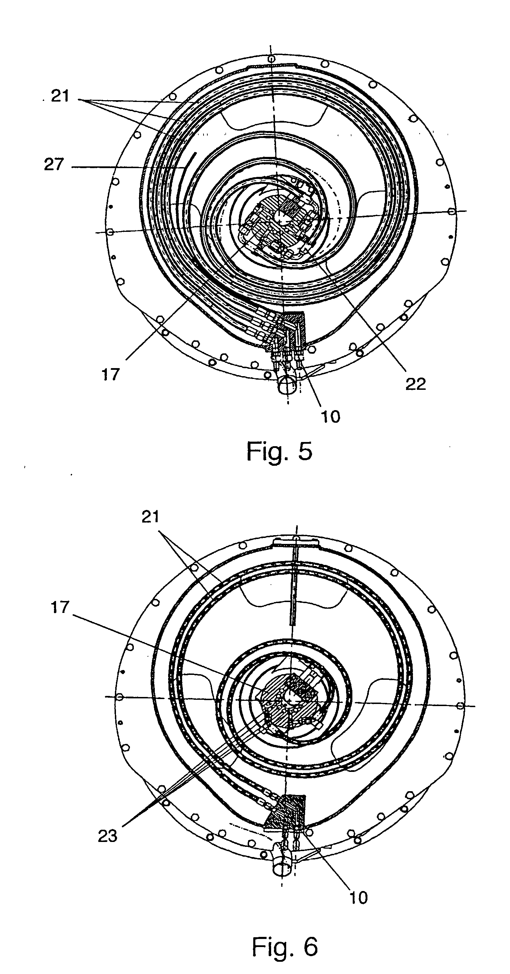

Die Erfindung wird nachfolgend Anhang eines in der Zeichnung schematisch dargestellten Ausführungsbeispieles näher erläutert. In der Zeichnung zeigt Figur 1 schematisch eine Vorderansicht einer Schrämmaschine mit einem aus zwei relativ zueinander verschwenkbaren Auslegerarmteilen bestehenden Auslegerarm, Figur 2 einen Schnitt nach der Linie II-II der Figur 1, Figur 3 eine Teilansicht von Figur 2 in einer abgewandelten Ausführung, Figur 4 einen Schnitt nach der Linie IV-IV der Figur 3, Figur 5 einen Schnitt nach der Linie V-V der Figur 3 und Figur 6 einen Schnitt nach der Linie VI-VI der Figur 3.

In Figur 1 ist eine Schrämmaschine 1 dargestellt, deren stationärer Maschinenrahmen mit 2 bezeichnet ist. Am Maschinenrahmen 2 ist um eine Achse 3 ein erster Auslegerarmteil 4 angeordnet. Für den Antrieb ist ein Hydraulikmotor 5 vorgesehen, welcher mit einem Planetengetriebe verbunden ist. Am ersten Auslegerarmteil 4 ist eine Schwenkachse 6 angeordnet, um welche ein zweiter Auslegerarmteil 7 schwenkbar gelagert ist. Die Auslegerarmteile sind hiebei um einen Winkel von ungefähr 300° relativ zueinander schwenkbar. Am zweiten Auslegerarmteil 7 ist eine Schrämwalze 8 angeordnet, sodaß der Auslegerarmteil 7 sowohl mit elektrischen Leitungen für den Schrämantrieb als auch mit Hydraulikleitungen für den hydraulischen Antrieb für die Verschwenkung des zweiten Auslegerarmteiles 7 relativ zum ersten Auslegerarmteiles 4 versorgt werden muß. Zu diesem Zweck ist der erste Auslegerarmteil 4 starr mit einer schematisch angedeuteten Kammer 9 verbunden, in welche die Energieversorgungsleitungen an einer Stelle 10 münden. Im Bereich des ersten Auslegerarmteiles 4 sind die Leitungen, wie mit 11 angedeutet, bis zur Anschlußstelle 10 frei geführt.

In Fig. 2 ist nun ein Schnitt durch die Auslegerarmteile gemäß der Linie II-II von Fig. 1 dargestellt. Mit 4 ist wiederum der erste Auslegerarmteil bezeichnet, mit welchem die Kammer 9 starr verbunden ist. Mit 7 ist wiederum der zweite Auslegerarmteil dargestellt, wobei nun auch der Hydraulikmotor 12 für die Verschwenkung des Auslegerarmteils 7 relativ zum Auslegerarmteil 4 dargestellt ist. Mit 13 ist weiters schematisch der Motor für den Antrieb der Schrämwerkzeuge dargestellt. Der Hydraulikmotor 12 treibt über ein Zwischengetriebe ein Sonnenrad 14 eines Planetenradgetriebes 15 für die Verschwenkung des zweiten Auslegerarmteils 7 an. Der zweite Auslegerarmteil 7 ist hiebei über ein Lager 16 gegenüber dem ersten Auslegerarmteil 4 abgestützt.

Mit dem zweiten Auslegerarmteil 7 ist nun ein Durchführungszylinder 17 für die Durchführung der Energieversorgungsleitungen starr verbunden, sodaß es bei Verschwenkung des Auslegerarmteils 7 zu einer Relativdrehung zwischen dem Zylinder 17 und der Kammer 9 kommt. Wie bereits erwähnt, sind die Energiezuführungsleitungen an die Kammer 9 über ein Anschlußstück 10 verbunden, wobei die Leitungen innerhalb der Kammer 9 spiralförmig geführt sind. Wie aus der in Fig. 2 dargestellten Ausführungsform ersichtlich ist, ist die Kammer 9 in einen ersten Teilbereich 18 für die elektrische Leitung 19 und einen zweiten Teilbereich 20 für die Hydraulikleitungen 21 geteilt. Die Hydraulikleitungen können hiebei, wie in der oberen Hälfte von Fig. 2 dargestellt, innerhalb eines flexiblen Schutzschlauches gebündelt geführt sein oder, wie in der unteren Hälfte von Fig. 2 dargestellt, lose geführt werden, wobei jeweils eine Mehrzahl von Hydraulikleitungen in voneinander verschiedenen Radialebenen angordnet ist. In jedem Fall sind die Hydraulikleitungen 21 über Anschlußnippel 22 an den Durchführungszylinder 17 angeschlossen, wobei auf diese Weise das Hydraulikmedium in die axialen Bohrungen des Zylinders 17 gelangt. In der Schnittdarstellung gemäß Fig. 2 ist eine derartige Bohrung 23 ersichtlich. In dem Kammerteil 18 sind die elektrischen Leitungen 19 sprialförmig geführt, welche über ein in den nachfolgenden Figuren näher dargestelltes Umlenkstück in eine axiale Bohrung 24 des Zylinders 17 umgelenkt wird. An der der Zuführung abgewandten Seite des Zylinders 17 werden die Leitungen 19 und 21 aus dem Zylinder 17 wieder herausgeführt und dem Hydraulikmotor 12 bzw. dem Schrämmotor 13 zugeführt.

In Fig. 3 ist nun eine abgewandelte Ausbildung der Kammer dargestellt, bei welcher der für die Hydraulikleitungen 21 vorgesehene Kammerteil 20 durch Trennwände 25 in drei axiale Teilbereiche getrennt ist, wobei in jedem dieser Teilbereiche eine Mehrzahl von Hydraulikleitungen sprialförmig aufgenommen ist.

In Fig. 4 ist der Kammerbereich 18 dargestellt, in welchem die elektrischen Leitungen 19 geführt sind, wobei ersichtlich ist, daß die Leitungen 19 über ein Umlenkstück 26 in die axiale Bohrung 24 des Zylinders 17 geleitet werden. Außerdem ist ersichtlich, daß die axiale Bohrung 24 für die elektrischen Leitungen 19 mit einem größeren Durchmesser ausgeführt ist als die halbkreisförmig um die axiale Bohrung 24 angeordneten mit kleinem Durchmesser ausgeführten axialen Bohrungen 23 für den Anschluß der Hydraulikleitungen.

Fig. 5 zeigt einen der durch die Zwischenwände 25 abgetrennten Bereiche des Kammerteils 20, in welchem drei Hydraulikleitungen angeordnet sind. Die Hydraulikleitungen sind parallel geführt und werden, wie bereits beschrieben, über Anschlußnippel 22 an die axialen Bohrungen 23 angeschlossen. Um eine Reibung der einzelnen Windungen der sprialförmig geführten Leitungen aneinander zu verhindern, ist in der in Fig. 5 dargestellten Ausbildung ein Leitblech 27 angeordnet.

In Fig. 6 schließlich ist ein weiterer Bereich der Teilkammer 20 dargestellt, in welcher lediglich zwei Hydraulikleitungen geführt sind.

Durch die erfindungsgemäße Axialdurchführung für Hydraulik-und elektrische Leitungen wird eine Ausbildung geschaffen, welche für geringe Durchlaßquerschnitte geeignet ist und welche beispielsweise im Inneren eines Planetenradgetriebes Platz findet. Die Anordnung der axialen Bohrungen innerhalb des Durchführungszylinders und die erfindungsgemäße Wahl von deren Druchmesser ermöglicht eine optimale Ausnützung des zur Verfügung stehenden Durchlaßquerschnitts.

## Patentansprüche

1. Vorrichtung zur Überführung von Hydraulik- und elektrischen Leitungen zwischen zwei gelenkig miteinander verbundenen Bauteilen, welche um einen begrenzten Winkel gegeneinander schwenkbar oder drehbar sind, wobei mit einem Bauteil ein Zylinder für die Axialdurchführung der Hydraulik- und elektrischen Leitungen verbunden ist und mit dem anderen Bauteil eine einen axialen Teilbereich des Zylinders umgebende Kammer verbunden ist, **dadurch gekennzeichnet, daß** der Zylinder (17) eine Mehrzahl von axialen Bohrungen (23,24) aufweist und daß die Kammer (9) einen ersten axialen Teilbereich (18) für wenigstens eine spiralförmig geführte elektrische Leitung (19) und wenigstens einen weiteren, längs der Achse der Kammer (9) versetzten axialen Teilbereich (20) für spiralförmig geführte Hydraulikleitungen (21) aufweist, wobei eine Mehrzahl von Hydraulikleitungen (21) über je einen Anschlußnippel (22) mit je einer axialen Bohrung (23) verbunden ist.

2. Vorrichtung nach Anspruch 1, **dadurch gekennzeichnet, daß** die mit den Hydraulikleitungen (21) verbundenen axialen Bohrungen (23) einen kleineren Durchmesser aufweisen als die axiale Bohrung (24) für die elektrische(n) Leitung(en) (19).

3. Vorrichtung nach Anspruch 1 oder 2, **dadurch gekennzeichnet, daß** die elektrische(n) Leitung(en) (19) über ein Umlenkstück (26) und einen radialen Kanal des Zylinders (17) in die axiale Bohrung (24) geführt ist (sind).

4. Vorrichtung nach Anspruch 1, 2 oder 3, **dadurch gekennzeichnet, daß** die mit den Hydraulikleitungen (21) verbundenen axialen Bohrungen (23) teilkreisförmig um die axiale Bohrung (24) für die elektrische(n) Leitung(en) (19) angeordnet sind.

5. Vorrichtung nach einem der Ansprüche 1 bis 4, **dadurch gekennzeichnet, daß** jeweils eine Gruppe von Hydraulikleitungen (21) in voneinander verschiedenen axialen Teilbereichen der Kammer (9) geführt ist.

6. Vorrichtung nach einem der Ansprüche 1 bis 5, **dadurch gekennzeichnet, daß** die axialen Teilbereiche der Kammer (9) durch sich wenigstens über einen Teilbereich des Querschnitts erstreckende Zwischenwände (25) voneinander getrennt sind.

7. Vorrichtung nach einem der Ansprüche 1 bis 6, **dadurch gekennzeichnet, daß** eine Mehrzahl von spiralförmig geführten Hydraulikleitungen (21) von einem flexiblen Schutzschlauch umgeben ist.

8. Vorrichtung nach einem der Ansprüche 1 bis 7, **dadurch gekennzeichnet, daß** in der Kammer (9) Leitbleche (27) angeordnet sind, welche die einzelnen Windungen der spiralförmig geführten Hydraulikleitungen (21) voneinander trennen.

9. Vorrichtung nach einem der Ansprüche 1 bis 8, **dadurch gekennzeichnet, daß** eine Mehrzahl der mit den Hydraulikleitungen (21) verbundenen axialen Bohrungen (23) an der der Zuführung abgewandten Seite des Zylinders (17) über eine gemeinsame Ableitung mit einem Verbraucher (12,13) verbunden ist.

10. Vorrichtung nach einem der Ansprüche 1 bis 9, **dadurch gekennzeichnet, daß** auf dem Zylinder (17) ein Sonnenrad (14) eines Planetenradgetriebes (15) für die Verschwenkung der gelenkig miteinander verbundenen Bauteile (4,7) gleitend gelagert ist.

## Revendications

1. Dispositif pour l'acheminement de conduites hydrauliques et électriques entre deux composants reliés entre eux de manière articulée et capables de pivotement ou de rotation selon un angle limité l'un par rapport à l'autre, l'un des éléments étant relié à un cylindre pour le passage axial des conduites hydrauliques et électriques et l'autre élément étant relié à une chambre entourant une partie axiale du cylindre, **caractérisé en ce que** le cylindre (17) possède une pluralité d'alésages axiaux (23, 24) et **en ce que** la chambre (9) possède une première partie axiale (18) pour au moins une conduite électrique (19) passée en spirale et au moins une autre partie axiale (20) décalée de long de l'axe de la chambre (9) pour des conduites hydrauliques (21) passées en spirale, une pluralité de conduites hydrauliques (21) étant reliées chacune respectivement à un alésage axial (23) par un manchon de raccordement (22).

2. Dispositif selon la revendication 1, **caractérisé en ce que** les alésages axiaux (23) associés aux conduites hydrauliques (21) ont un plus petit diamètre que l'alésage axial (24) destiné à la conduite ou aux conduites électriques (19).

3. Dispositif selon la revendication 1 ou 2, **caractérisé en ce que** la ou les conduites électriques (19) sont guidées par un élément de déviation (26) et un canal radial du cylindre (17) vers l'alésage axial (24).

4. Dispositif selon la revendication 1, 2 ou 3, **caractérisé en ce que** les alésages axiaux (23) associés aux conduites hydrauliques (21) sont disposés en segment de cercle autour de l'alésage axial (24) destiné à la conduite ou aux conduites électriques (19).

5. Dispositif selon l'une des revendications 1 à 4, **caractérisé en ce que** chaque groupe de conduites hydrauliques (21) est guidé dans des parties axiales différentes de la chambre (9).

6. Dispositif selon l'une des revendications 1 à 5, **caractérisé en ce que** les parties axiales de la chambre (9) sont séparées les unes des autres par des cloisons (25) qui s'étendent sur au moins une partie de la section.

7. Dispositif selon l'une des revendications 1 à 6, **caractérisé en ce qu'**une pluralité de conduites hydrauliques (21) passées en spirale est entourée par un tuyau de protection flexible.

8. Dispositif selon l'une des revendications 1 à 7, **caractérisé en ce qu'**il est prévu dans la chambre (9) des tôles de guidage (27) qui séparent les uns des autres les tours des conduites hydrauliques (21) passées en spirale.

9. Dispositif selon l'une des revendications 1 à 8, **caractérisé en ce qu'**une pluralité d'alésages axiaux (23) associés avec des conduites hydrauliques (21) est reliée sur le côté du cylindre (17) opposé à l'arrivée, par une conduite de sortie commune, à un consommateur (12, 13).

10. Dispositif selon l'une des revendications 1 à 9, **caractérisé en ce qu'**une roue solaire (14) d'un engrenage à train planétaire (15) destiné à faire pivoter les éléments (4, 7) reliés de façon articulée l'un par rapport à l'autre est supportée de façon coulissante sur le cylindre (17).

## Claims

1. A device for conducting hydraulic and electric lines between two articulately connected structural components capable of being relatively pivoted or rotated about a limited angle, wherein one structural component is connected with a cylinder for the axial leadthrough of said hydraulic and electric lines and the other structural component is connected with a chamber enclosing an axial subportion of said cylinder, **characterized in that** the cylinder (17) comprises a plurality of axial bores (23, 24) and that the chamber (9) comprises a first axial subportion (18) for at least one spirally guided electric line (19) and at least one further axial subportion (20) located to be offset along the axis of the chamber (9) for spirally guided hydraulic lines (21), wherein a plurality of hydraulic lines (21) are each connected with a respective axial bore (23) by one connection nipple (22) each.

2. A device according to claim 1, **characterized in that** the axial bores (23) connected with the hydraulic lines (21) have smaller diameters than the axial bore (24) for the electric line (s) (19).

3. A device according to claim 1 or 2, **characterized in that** the electric line(s) (19) is/are guided into the axial bore (24) via a deflection piece (26) and a radial channel of the cylinder (17).

4. A device according to claim 1, 2 or 3, **characterized in that** the axial bores (23) connected with the hydraulic lines (21) are arranged in a partial circle about the axial bore (24) for the electric line(s) (19).

5. A device according to any one of claims 1 to 4, **characterized in that** one group of hydraulic lines (21) is each guided in different axial subportions of the chamber (9).

6. A device according to any one of claims 1 to 5, **characterized in that** the axial subportions of the chamber (9) are separated from one another by partition walls (25) extending over at least a subportion of the cross section.

7. A device according to any one of claims 1 to 6, **characterized in that** a plurality of spirally guided hydraulic lines (21) is surrounded by a flexible protection hose.

8. A device according to any one of claims 1 to 7, **characterized in that** guiding plates (27) are arranged in the chamber (9) to separate the individual windings of the spirally guided hydraulic lines (21).

9. A device according to any one of claims 1 to 8, **characterized in that** a plurality of said axial bores (23) connected with the hydraulic lines (21) is each connected with a load (12, 13) via a common discharge on the cylinder side facing away from the supply.

10. A device according to any one of claims 1 to 9, **characterized in that** a sun wheel (14) of a planet gear (15) is slidingly mounted on the cylinder (17) to pivot the articulately connected structural components (4, 7).
